# EUROPEAN PATENT APPLICATION

(11) **EP 4 020 699 A1**
(43) Date of publication of application: **29.06.2022**
(21) Application number: 19943683.3
(22) Date of filing: 26.09.2019
(51) Int. Cl.: H01M 50/531, H01M 10/04, H01M 6/00

(54) **INTEGRATED-TAB CELL PRODUCTION LINE**

(30) Priority: 29.08.2019 CN 201910809836
(71) Applicant: Wuhan Yifi Laser Corp., Ltd., Wuhan, Hubei 430000 (CN)
(72) Inventor: WU, Xuan, Wuhan, Hubei 430000 (CN); CHENG, Conggui, Wuhan, Hubei 430000 (CN); RAN, Changlin, Wuhan, Hubei 430000 (CN); ZENG, Weiming, Wuhan, Hubei 430000 (CN); YOU, Hao, Wuhan, Hubei 430000 (CN)
(74) Representative: Raffay & Fleck
(86) International application number: PCT/CN2019/108046
(87) International publication number: WO 2021/035860

(57) **Abstract**

An integrated-tab cell production line comprises a flattening unit (1), a paste coating unit (2), a housing insertion unit (3), and a collector plate welding unit (4) sequentially disposed in a production direction. The flattening unit (1) comprises an ultrasonic flattening sub-unit (11) and a mechanical flattening sub-unit (12). The ultrasonic flattening sub-unit (11) performs ultrasonic flattening pretreatment on an end surface of a cell. The mechanical flattening sub-unit (12) performs mechanical flattening on the end surface of the cell that has undergone the flattening pre-treatment. The paste coating unit (2) coats an insulation paste onto the flattened cell. The housing insertion unit (3) presses the cell coated with the insulation paste into a housing. The collector plate welding unit (4) welds collector plates to two ends of a cell, welds collector plates to two ends of a cell that has been placed in the housing, and bends a tab to a predetermined angle. The production line effectively improves the yield rate and the level of automation for integrated-tab cell manufacturing processes, and reduces the production cost of integrated-tab cells.

## Description

### CROSS-REFERENCE TO RELATED APPLICATION

The present application claims priority to Chinese application No. 2019108098369 filed on August 29, 2019, entitled "Full-tab Cell Production Line", which is hereby incorporated by reference in its entirety.

### FIELD OF TECHNOLOGY

The present application relates to the field of battery processing, and in particular to a full-tab cell production line.

### BACKGROUND

As core components of batteries, cells are usually assembled by means of laminating and winding methods. The winding method is widely used due to the simple process, high assembly efficiency, and easy to realize the automation. There are different types of internal design structures of the batteries such as single-tab, multi-tab and full-tab.

Compared with the multi-tab design structure, the full-tab design structure is relatively simple and has low requirements for equipment. In addition, a pole piece of the full-tab cell bears less heat and thus the higher power density may be achieved. However, there are problems in the processing, such as low yield and difficulty to directly integrate into the mass production line.

### BRIEF SUMMARY

### (1) Technical problems to be solved

In view of the above technical defects and application requirements, a full-tab cell production line is provided, which aims to solve the problems of low yield and difficulty in direct mass production of full-tab cells.

### (2) Technical solutions

In order to solve the above-mentioned problems, a full-tab cell production line configured to process the full-tab cells is provided. The full-tab cell includes a shell, a core, a positive current collector and a negative current collector. The core is disposed in the shell. Both ends of the cell are welded with the positive current collector and the negative current collector, respectively, and each of the positive current collector and the negative current collector includes a first cover plate, a second cover plate and tabs connected in sequence.

The full-tab cell production line includes: a flattening unit, a gluing unit, a shell insertion unit, and a current collector welding unit, which are sequentially arranged in a processing direction, wherein the flattening unit includes an ultrasonic flattening sub-unit configured to perform ultrasonic flattening pretreatment on the end surface of a core and a mechanical flattening sub-unit configured to mechanically flatten the end surface of the core after the flattening pretreatment; the gluing unit is configured to wrap an insulation tape around flattened core; the shell insertion unit is configured to press the glued core with the insulation tape into a shell; the current collector welding unit is configured to weld the positive current collector and the negative current collector to both ends of the core, where the first cover plate corresponding to the positive current collector and the negative current collector are respectively welded to both ends of the core after shell insertion and the tabs corresponding to the welded positive current collector and the welded negative current collector are bent to a preset angle.

According to an embodiment, the ultrasonic flattening sub-unit includes ultrasonic flattening heads arranged at both ends of the core and provided with grooves. Both ends of the core are inserted into the grooves respectively, and each of the grooves has a bottom with a grid-like convex structure.

The mechanical flattening sub-unit includes a mechanical flattening head disposed opposite to the end surface of the core, and the mechanical flattening head is a ceramic flattening head.

According to an embodiment, the gluing unit includes a frame, a tape cutting mechanism, a core rotating mechanism, a tape unwinding mechanism, a tape stretching mechanism, and a core lifting mechanism, wherein the frame is provided with a vertically placed upright plate on which the tape unwinding mechanism is installed; the tape stretching mechanism is configured to move along with the direction of the upright plate; the tape cutting mechanism is installed on the upright plate and located above the tape stretching mechanism; the core lifting mechanism is installed below the tape stretching mechanism and located right below the tape cutting mechanism, and the core rotating mechanism and the core lifting mechanism are disposed opposite to each other.

According to an embodiment, the tape unwinding mechanism includes a runner and at least two guide wheels; wherein the runner and the at least two guide wheels are respectively rotatably installed on the upright plate, and one of the guide wheels is arranged in parallel with the tape stretching mechanism, and another one of the guide wheels is arranged in parallel with the runner.

According to an embodiment, the core rotating mechanism includes a motor and a roller, wherein the roller is installed on an output shaft of the motor so that the roller contacts a surface of the core.

According to an embodiment, the core lifting mechanism includes a pair of core lifting units arranged opposite to each other, and each of the pair of core lifting units includes a lifting cylinder, a jacking support wheel and a mounting base for the jacking support wheel, wherein the mounting base is installed at a movable end of the lifting cylinder and provided with two jacking support wheels located at the same height and arranged at intervals.

According to an embodiment, the shell insertion unit includes a shell tightening mechanism, a core pushing mechanism, and a guide groove. The shell tightening mechanism is arranged at a first end of the guide groove, and the core pushing mechanism is arranged at a second end of the guide groove. The shell tightening mechanism includes a first push plate arranged along an axial direction of the guide groove, a side of the first push plate facing to the guide groove is provided with a frustum-shaped top block, the frustum-shaped top block is coaxial with the guide groove and has an end with a smaller cross-section facing to the guide groove, and an end of the top block inserted into the shell is configured to fix the shell.

According to an embodiment, the full-tab cell production line further includes a cap-closing and pre-welding unit arranged behind the current collector welding unit, and configured to pre-weld the first cover plate and the second cover plate to the shell.

According to an embodiment, the full-tab cell production line further includes a seal-welding unit, a coding unit, and a helium detection unit, which are sequentially arranged along the processing direction; wherein the seal-welding unit is arranged behind the cap-closing and pre-welding unit and configured to perform seal welding on the second cover plate; the coding unit is configured to engrave a two-dimensional code on the seal welded second cover plate; and the helium detection unit is configured to detect sealing performance of the product.

### (3) Beneficial effects

In the full-tab cell production line according to the present application, the flattening unit, the gluing unit, the shell insertion unit, and the current collector welding unit are provided. The core is disposed in the shell and the positive current collector and the negative current collector are arranged at both ends of the core, respectively, such that the entire production process can be efficiently completed, thereby effectively improving the yield rate and the level of automation during the processing of the full-tab cells, and reducing the production cost of the full-tab cells.

### BRIEF DESCRIPTION OF THE DRAWINGS

In order to more clearly explain the technical solutions disclosed in the embodiments of the present application or the related art, the drawings used in the descriptions of the embodiments or the related art will be briefly described below. The drawings in the following description are only certain embodiments of the present application, and other drawings may be obtained according to these drawings without any creative work for those skilled in the art.
FIG. 1 is a schematic structural diagram of a full-tab cell production line according to an embodiment of the present application;
FIG. 2 is a schematic structural diagram of an ultrasonic flattening sub-unit according to an embodiment of the present application;
FIG. 3 is a schematic structural diagram of a mechanical flattening sub-unit according to an embodiment of the present application;
FIG. 4 is a schematic structural diagram of a gluing unit according to an embodiment of the present application; and
FIG. 5 is a schematic structural diagram of a shell insertion unit according to an embodiment of the present application;

**Reference Numbers:**

| | | | | | |
|---|---|---|---|---|---|
| 1. | flattening unit; | 2. | gluing unit; | 3. | shell insertion unit; |
| 4. | current collector welding unit; | 5. | cap-closing and pre-welding unit; | | |
| 6. | seal-welding unit; | 7. | coding unit; | 8. | helium detection unit; |
| 11. | ultrasonic flattening sub-unit; | 12. | mechanical flattening sub-unit; | | |
| 20. | support wheel; | 21. | roller; | 22. | motor; |
| 25. | runner; | 26. | guide wheel; | 29. | cylinder; |
| 32. | first push plate; | 33. | top block; | 36. | guide groove; |
| 41. | positive current collector welding unit; | | | | |
| 42. | negative current collector welding unit; | | | | |
| 111. | ultrasonic flattening head; | | | | |
| 112. | mechanical flattening head. | | | | |

### DETAILED DESCRIPTION

In order to explain the object, technical solutions and advantages of the present application much clear, the technical solutions in the embodiments of the present application are clearly and completely described in the following with reference to the accompanying drawings in the present application. Obviously, these embodiments are a part of the embodiments of the present application, and not all of the embodiments. All other embodiments obtained by a person of ordinary skill in the art based on the embodiments of the present application without any creative work belong to the scope of the present application.

According to an embodiment of the present application, a full-tab cell production line configured to process the full-tab cells is provided. The full-tab cell includes a shell, a core, a positive current collector and a negative current collector. The core is disposed in the shell, both ends of the core are welded with the positive current collector and the negative current collector, respectively. The positive current collector and the negative current collector have the same structure. Each of the positive current collector and the negative current collector includes a first cover plate, a second cover plate and tabs, which are connected in sequence.

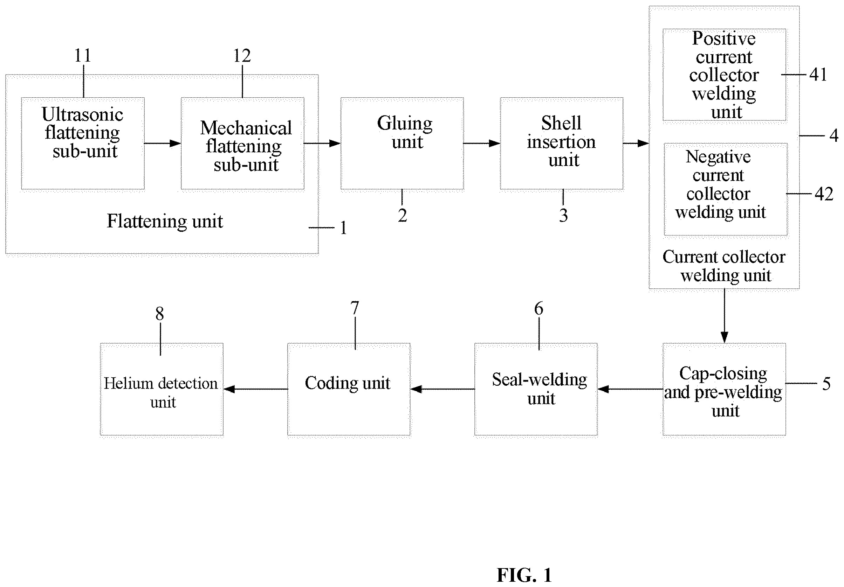

According to an embodiment, as shown in FIG. 1, the full-tab cell production line includes: a flattening unit 1, a gluing unit 2, a shell insertion unit 3, and a current collector welding unit 4, which are sequentially arranged in a processing direction. The flattening unit 1 includes an ultrasonic flattening sub-unit 11 configured to perform ultrasonic flattening pretreatment on an end surface of a core and a mechanical flattening sub-unit 12 configured to mechanically flatten the end surface of the core that has undergone the flattening pretreatment. The gluing unit 2 is configured to wrap an insulation tape around flattened core, generally a layer of insulation tape is provided with an edge extending beyond a certain distance from the end surface of the core. By wrapping an insulation tape around the core, the core may be prevented from being scratched when inserting the core in the shell and the core may be avoided from directly contacting the shell and thus short circuit may be avoided. The shell insertion unit 3 is configured to insert the core wrapped with the insulation tape into the shell and a constant relative position of each core with respect to the corresponding shell needs to be ensured. The current collector welding unit 4 is configured to weld the positive current collector and the negative current collector to both ends of the core, weld the first cover plate respectively corresponding to the positive current collector and the negative current collector to both ends of the core in the shell and bend tabs corresponding to the welded positive current collector and the welded negative current collector in a preset angle, generally 90 degrees, to prepare for the subsequent cap closure.

The current collector welding unit 4 includes a positive current collector welding unit 41 and a negative current collector welding unit 42. The positive current collector welding unit 41 is configured to weld the first cover plate corresponding to the positive current collector to the cathode of the core, and bend the tab corresponding to the positive current collector in a preset angle. The negative current collector welding unit 42 is configured to weld the first cover plate corresponding to the negative current collector to the anode of the core, and bend the tab corresponding to the negative current collector in a preset angle.

In the full-tab cell production line according to an embodiment of the present application, by arranging the flattening unit, the gluing unit, the shell insertion unit, and the current collector welding unit, the core is disposed in the shell and the positive current collector and the negative current collector are arranged at both ends of the core, respectively, such that the entire production process can be efficiently completed with the production line, thereby effectively improving the yield rate and the degree of automation during the processing of the full-tab cell, and reducing the production cost of the full-tab cells.

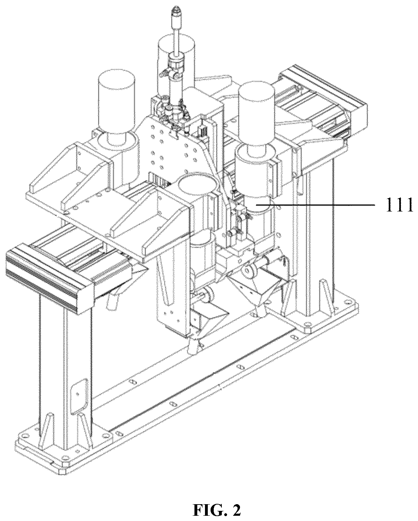

Based on the above embodiments, as shown in FIG. 2, the ultrasonic flattening sub-unit includes ultrasonic flattening heads 111 arranged at both ends of the core and provided with grooves into which both ends of the core are correspondingly inserted and each of the grooves has a bottom with a grid-like convex structure.

A flattening station is disposed in a conveying path of the cell. When the core is conveyed to the ultrasonic flattening sub-unit 11, the ultrasonic flattening sub-unit 11 is configured to vibrate and flatten both end surfaces of the core at the same time through the ultrasonic flattening heads 111, which can achieve the flattening effect and improve the compactness of the end surfaces of the core for preparing for the followup process.

A groove is disposed on the ultrasonic flattening head 111, and the end surface of the core may be placed in the groove for vibrating and further flattening. The groove can limit the end surface of the core therein, which prevents core material from turning out, and ensures the flattening effect and improves the production efficiency.

In an embodiment, each of the grooves has a bottom with a grid-like convex structure. That is, a number of small recesses are uniformly arranged on the bottom of the groove, and the small recesses form a grid shape, so that there are grid-like holes on the bottom of the groove. Through arranging the grid-like convex structure, evenly distributed holes are formed on the bottom of the groove and a core material at the end surface of the cell may be inserted into the holes on the bottom of the groove. Since the holes on the grid are evenly distributed on the bottom of the groove, the material on the end surface of the core will be evenly inserted into the holes on the grid, so that the material on the end surface of the core is also evenly distributed on the bottom of the groove.

Through arranging the grid-like convex structure, on one hand, the core material at the end surface of the cell may be evenly distributed in the groove and will not be squeezed together, thereby better flattening the core and improving the flattening effect; on the other hand, the core material at the end surface of the cell may be fixed and limited to make it better contact with the ultrasonic flattening heads 111 to improve the flattening efficiency.

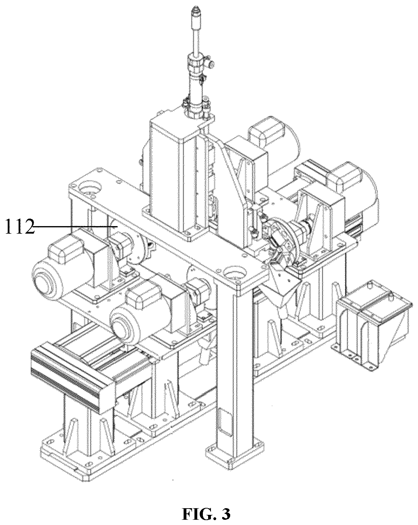

In addition, as shown in FIG. 3, the mechanical flattening sub-unit further includes a mechanical flattening head 112 disposed opposite to the end surface of the core, and the mechanical flattening head 112 is a ceramic flattening head. The core is roughly flattened by the ultrasonic flattening sub-unit. The roughly flattened core then is conveyed to the mechanical flattening sub-unit, and is rotated, squeezed and flattened by the mechanical flattening head 112 and the turned-out core material is squeezed the to the inside, which improves the compactness of the end surface and achieve fine flattening effect for preparing for the subsequent shell inserting and tab welding process.

The mechanical flattening head 112 is also configured to flatten both ends of the core synchronously. The mechanical flattening head 112 performs the flattening by mechanical rotary extrusion. By using the ultrasonic flattening sub-unit and the mechanical flattening sub-unit to doubly flatten the end surfaces of the core, the defect that the flattened end surface is not flat enough by only the ultrasonic flattening is solved, and the core material is not overturned and the flatness and compactness of the end surface improved.

In an embodiment, the mechanical flattening head 112 for squeezing and flattening the end surface of the core is formed by a hard ceramic material, which can ensure the hardness of squeezing & flattening while has an insulation property, thereby improving safety.

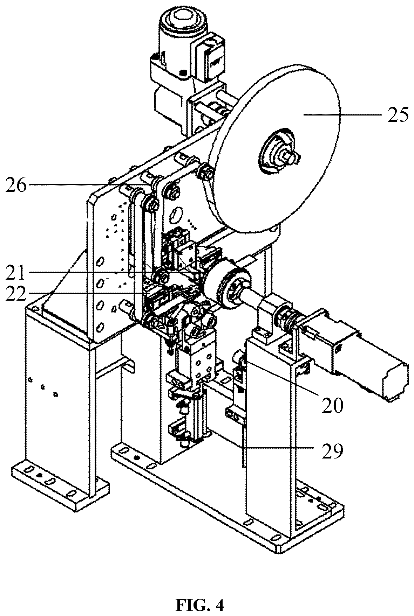

Based on the foregoing embodiment, as shown in FIG. 4, the gluing unit includes a frame, a tape cutting mechanism, a core rotating mechanism, a tape unwinding mechanism, a tape stretching mechanism, and a core lifting mechanism.

The frame is provided with a vertically arranged upright plate, which may be a rectangular upright plate, on which the tape unwinding mechanism is installed and a tape is placed on the tape unwinding mechanism; the tape stretching mechanism moves along with the upright plate; the tape cutting mechanism is installed on the upright plate and located above the tape stretching mechanism; the core lifting mechanism is installed below the tape stretching mechanism and located right below the tape cutting mechanism, and the core rotating mechanism and the core lifting mechanism are disposed opposite to each other.

In the implementation of the present application, the core is lifted to a predetermined height by the core lifting mechanism, and the core rotating mechanism makes the core rotate 360° on the core lifting mechanism. The tape unwinding mechanism releases the tape along a preset path, and the tape stretching mechanism drives the tape to move along with the upright plate; after the tape moves a certain distance along with the upright plate, the tape cutting mechanism moves along the width direction of the upright plate, that is, along a direction perpendicular to the tape to cut the tape; at this time, an end of the tape is adhered to the core, and through the rotation of the core, the tape completely wraps the end of the core. By the gluing unit of the embodiment of the present application, the problem that the core rotates too fast due to the motor directly driving the rotation of the core, thereby affecting the tape wrapping quality of the core may be avoided.

As shown in FIG. 4, the tape unwinding mechanism includes a runner 25 and at least two guide wheels 26; wherein the runner 25 and the at least two guide wheels 26 are respectively rotatably installed on the upright plate, and one of the at least two guide wheels is arranged in parallel with the tape stretching mechanism, and another one of the at least two guide wheels 26 is arranged in parallel with the runner 25.

In the implementation of the present application, the runner 25 is installed with a tape and installed on a first side of the upright plate. The runner 25 is installed on an output shaft of the motor, driven by the motor to ensure that the tension of the tape is consistent. A plurality of guide wheels 26 are installed on the first side of the upright plate. As an example, four guide wheels 26 are disposed at the first side of the upright plate. The four guide wheels 26 include a first guide wheel, a second guide wheels, a third guide wheel and a fourth guide wheel in which the first guide wheel, the second guide wheel and the third guide wheel are located at the same height, and every two of them are spaced by a certain distance. The first guide wheel, the second guide wheel and the third guide wheel are arranged in parallel with the runner 25, the fourth guide wheel is located right below the third guide wheel, the fourth guide wheel and the third guide wheel are spaced by a certain distance, and the fourth guide wheel and the tape stretching mechanism are located at the same height. By arranging the plurality of guide wheels, the flatness of the output tape may be effectively ensured and the tape may be prevented from twisting, and the tape-wrapping quality is ensured.

In an embodiment, the core rotating mechanism includes a motor 22 and a roller 21, wherein the roller 21 is installed on an output shaft of the motor 22 so that the roller 21 is in contact with a surface of the core.

In an embodiment, the core lifting mechanism includes a pair of core lifting units arranged opposite to each other, and each of the pair of core lifting units includes a lifting cylinder 29, a jacking support wheel 20 and a mounting base for the jacking support wheel, wherein the mounting base is installed at a movable end of the lifting cylinder and installed with two jacking support wheels 20 located at the same height and arranged at intervals. The core is perpendicular to the first side of the upright plate, the mounting base is driven by the lifting cylinder 29 to rise and then the core is lifted and an end of the core is located between two jacking support wheels.

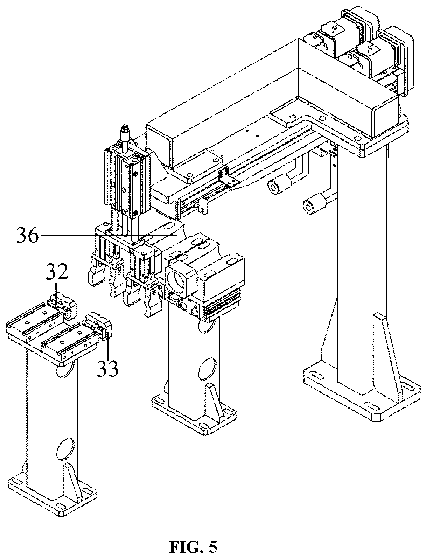

Based on the foregoing embodiment, as shown in FIG. 5, the shell insertion unit includes a shell tightening mechanism, a core pushing mechanism, and a guide groove 36; wherein the shell tightening mechanism is arranged at a first end of the guide groove, and the core pushing mechanism is arranged at a second end of the guide groove. The guiding groove 36 plays a guiding role in the process of inserting the core into the shell. Both the shell and the core may be placed on the guide groove 36. The shell tightening mechanism is configured to tighten and fix the shell. The core pushing mechanism is configured to push or fix the core. The core can be inserted into the shell by the relative movement of the shell and the core along the guide groove 36.

The shell tightening mechanism includes a first push plate 32 arranged along the axial direction of the guide groove 36. That is, the first push plate 32 is arranged on the extension line of the axis of the guide groove 36 to uniformly apply force to the shell along the axis of the guide groove 36. A side of the first push plate 32 facing to the guide groove 36 is provided with a frustum-shaped top block 33, the frustum-shaped top block 33 is coaxial with the guide groove 36 and has an end with a smaller cross-section facing to the guide groove 36. An end of the top block 33 inserted into the shell is configured to fix the shell.

During the process of inserting the core into the shell, the top block 33 on the first push plate 32 is inserted into the inside of the shell from an end of the shell to tighten and fix the shell. Then, the core may be pushed to move by the core conveying mechanism into the shell. The top block 33 is frustum-shaped and may be easily inserted into the shell and damage to the shell can be avoided.

Through the shell insertion unit, the core may be automatically inserted into the shell, which reduces labor intensity and improves efficiency. By arranging a frustum-shaped top block 33 on the first push plate 32, the top block 33 is inserted into the shell to tighten and fix the shell so as to ensure that the core can be smoothly inserted into the shell and by arranging the top block 33, the shell may be centered well and the shell can be stably and firmly fixed. The size of top block 33 inserted into the shell is constant and thus the relative position of the core to the shell remains unchanged every time the core is inserted into the shell, which is beneficial to ensure product consistency and improve production efficiency.

As shown in FIG. 1 the full-tab cell production line further includes a cap-closing and pre-welding unit 5. The cap-closing and pre-welding unit 5 is arranged behind the current collector welding unit 4, and configured to pre-weld the first cover plate, the second cover plate and the shell. The cover plates and the shell are welded at two points and then connected to each other.

In an embodiment, the full-tab cell production line further includes a seal-welding unit 6. The seal-welding unit 6 is arranged behind the cap-closing and pre-welding unit 5 and configured to perform seal welding on the second cover plate. A swing welding head may be used to seal-weld the pre-welded second cover plate to the shell. In addition, a coding unit 7 and a helium detection unit 8 may be additionally disposed. The coding unit 7 may be disposed behind the seal-welding unit 6 and configured to engrave a two-dimensional code on the seal welded second cover plate, thereby engraving a two-dimensional code at a fixed position on the second cover plate and transferring the two-dimensional code of a product. The helium detection unit 8 is arranged behind the coding unit 7 and configured to detect sealing performance of products and detect a leakage of the products as the last detection process of the product production line. Products that do not meet the requirement for leakage standard will be excluded as NG (no good) products.

In a full-tab cell production line according to an embodiment of the present application, by arranging the flattening unit, the gluing unit, the shell insertion unit, the current collector welding unit, the cap-closing and pre-welding unit, the seal-welding unit, the coding unit, and the helium detection unit, providing the core in the shell and arranging the positive current collector and the negative current collector at both ends of the core, respectively, the entire production process can be efficiently completed, thereby effectively improving the yield rate and the degree of automation during the processing of the full-tab cell, and reducing the production cost of the full-tab cell.

The device embodiments described above are merely illustrative, wherein the units described as separate components may or may not be physically separate, and the components displayed as units may or may not be physical units, that is, may be located at the same place, or it can be distributed to multiple network units. Some or all of the modules may be selected according to actual needs to achieve the purpose of the solution of the embodiment. Those of ordinary skill in the art can understand and implement the embodiments described above without paying creative labors.

Finally, it should be noted that the above embodiments are only used to explain the technical solutions of the present application, and are not limited thereto; although the present application is described in detail with reference to the foregoing embodiments, it should be understood by those skilled in the art that they can still modify the technical solutions described in the foregoing embodiments and make equivalent replacements to a part of the technical features and these modifications and substitutions do not depart from the spirit and scope of the technical solutions of the embodiments of the present application.

## Claims

1. A full-tab cell production line for processing the full-tab cell, wherein the full-tab cell comprises a shell, a core, a positive current collector and a negative current collector, the core is disposed in the shell, two ends of the core are welded with the positive current collector and the negative current collector, respectively, and each of the positive current collector and the negative current collector comprises a first cover plate, a second cover plate and a tab connected in sequence; and the full-tab cell production line comprises:
a flattening unit, a gluing unit, a shell insertion unit, and a current collector welding unit sequentially arranged in a processing direction;
wherein the flattening unit comprises an ultrasonic flattening sub-unit configured to perform ultrasonic flattening pretreatment on both end surfaces of the core and a mechanical flattening sub-unit configured to mechanically flatten the end surface of the core after the flattening pretreatment;
the gluing unit is configured to wrap insulation tape around a flattened core;
the shell insertion unit is configured to insert the core wrapped with the insulation tape into the shell;
the current collector welding unit is configured to weld the positive current collector and the negative current collector to both ends of the core, weld the first cover plate respectively corresponding to the positive current collector and the negative current collector to both ends of the core in the shell and bend tabs corresponding to the welded positive current collector and the welded negative current collector to a preset angle.

2. The full-tab cell production line of claim 1, wherein the ultrasonic flattening sub-unit comprises ultrasonic flattening heads arranged at both ends of the core and provided with grooves, both ends of the core are inserted into the grooves respectively, and each of the grooves has bottom with a grid-like convex structure.

3. The full-tab cell production line of claim 2, wherein the mechanical flattening sub-unit comprises a mechanical flattening head disposed opposite to the end surface of the core, and the mechanical flattening head is a ceramic flattening head.

4. The full-tab cell production line of claim 1, wherein the gluing unit comprises a frame, a tape cutting mechanism, a core rotating mechanism, a tape unwinding mechanism, a tape stretching mechanism, and a core lifting mechanism,
wherein the frame is provided with a vertically arranged upright plate on which the tape unwinding mechanism is installed;
the tape stretching mechanism is configured to move along a length direction of the upright plate;
the tape cutting mechanism is installed on the upright plate and located above the tape stretching mechanism; and
the core lifting mechanism is installed below the tape stretching mechanism and located right below the tape cutting mechanism, and the core rotating mechanism and the core lifting mechanism are disposed opposite to each other.

5. The full-tab cell production line of claim 4, wherein the tape unwinding mechanism comprises a runner and at least two guide wheels;
the runner and the at least two guide wheels are respectively rotatably installed on the upright plate, and one of the at least two guide wheels is arranged in parallel with the tape stretching mechanism, and another one of the at least two guide wheels is arranged in parallel with the runner.

6. The full-tab cell production line of claim 4, wherein the core rotating mechanism comprises a motor and a roller, and the roller is installed on an output shaft of the motor so that the roller touches a surface of the core.

7. The full-tab cell production line of claim 4, wherein the core lifting mechanism comprises a pair of core lifting units arranged opposite to each other, and each of the pair of core lifting units comprises a lifting cylinder, a jacking support wheel and a mounting base for the jacking support wheel, and
the mounting base is installed at a movable end of the lifting cylinder and provided with two jacking support wheels located at the same height and arranged at intervals.

8. The full-tab cell production line of claim 1, wherein the shell insertion unit comprises a shell tightening mechanism, a core pushing mechanism, and a guide groove; and
wherein the shell tightening mechanism is arranged at a first end of the guide groove, and the core pushing mechanism is arranged at a second end of the guide groove, the shell tightening mechanism comprises a first push plate arranged along an axial direction of the guide groove, a side of the first push plate facing to the guide groove is provided with a frustum-shaped top block, the top block is coaxial with the guide groove and has an end with a smaller cross-section facing to the guide groove, and an end of the top block inserted into the shell is configured to fix the shell.

9. The full-tab cell production line of claim 1, further comprising a cap-closing and pre-welding unit arranged behind the current collector welding unit and configured to pre-weld the first cover plate and the second cover plate to the shell.

10. The full-tab cell production line of claim 9, further comprising a seal-welding unit, a coding unit, and a helium detection unit sequentially arranged along the processing direction,
wherein the seal-welding unit is arranged behind the cap-closing and pre-welding unit and configured to perform seal welding on the second cover plate;
the coding unit is configured to engrave a two-dimensional code on the second cover plate after the seal welding; and
the helium detection unit is configured to detect sealing performance of a product.
